# EUROPÄISCHE PATENTSCHRIFT

(11) **EP 1 678 813 B1**
(45) Veröffentlichungstag und Bekanntmachung des Hinweises auf die Patenterteilung: **01.05.2013**
(21) Anmeldenummer: 04790340.6
(22) Anmeldetag: 13.10.2004
(51) Int. Cl.: H02K 33/16

(54) **ANTRIEBSEINHEIT ZUR ERZEUGUNG EINER OSZILLIERENDEN BEWEGUNG FÜR ELEKTRISCHE KLEINGERÄTE**
DRIVE UNIT FOR GENERATING AN OSCILLATORY MOTION FOR ELECTRICAL SMALL-SCALE UNITS
UNITE D'ENTRAINEMENT POUR PRODUIRE UN MOUVEMENT OSCILLANT POUR PETITS APPAREILS ELECTROMENAGERS

(30) Priorität: 29.10.2003 DE 10350447
(43) Veröffentlichungstag der Anmeldung: 12.07.2006
(73) Patentinhaber: Braun GmbH, 61476 Kronberg (DE)
(72) Erfinder: KRAUS, Bernhard, 35619 Braunfels (DE); REICK, Hansjörg, 61449 Steinbach (DE); SCHOBER, Uwe, 61479 Glashütten-Schlossborn (DE)
(86) Internationale Anmeldenummer: PCT/EP2004/011467
(87) Internationale Veröffentlichungsnummer: WO 2005/048437

(56) Entgegenhaltungen:
- EP-A- 1 467 472
- DE-A1- 3 025 708
- GB-A- 1 587 772
- US-A- 3 483 410
- US-A- 3 624 574
- US-A- 3 959 673

## Beschreibung

Die Erfindung bezieht sich auf eine Antriebseinheit zur Erzeugung einer oszillierenden Bewegung für elektrische Kleingeräte nach dem Oberdegrift des Auspruchs 1; eine Solche Antriebs einheit ist aus der GB1587772 bekannt. Weiterhin bezieht sich die Erfindung auf ein elektrisches Kleingerät mit einer derartigen Antriebseinheit.

Elektrische Antriebseinheiten zur Erzeugung einer oszillierenden Bewegung werden beispielsweise bei elektrischen Zahnbürsten oder bei elektrischen Rasierapparaten eingesetzt. So ist aus der US 5,263,218 unter anderem eine elektrische Zahnbürste bekannt, bei der ein schwenkbarer Hebelarm, auf dem eine Bürste angeordnet ist, mittels eines feststehenden Elektromagneten und eines feststehenden Permanentmagneten in eine Vibrationsbewegung versetzt wird. Hierzu besteht der Hebelarm in einem zum Elektromagneten benachbarten Bereich aus einem ferromagnetischen Material, das den Permanentmagneten teilweise umschließt. Das ferromagnetische Material dient dazu, den vom Permanentmagneten erzeugten magnetischen Fluß an den Elektromagneten zu koppeln und dadurch den Hebelarm anzutreiben.

Aus der US 5,613,259 ist eine oszillierende Einrichtung, insbesondere eine elektrische Zahnbürste bekannt. Die Einrichtung weist einen mechanischen Oszillator auf, der von einem Elektromotor angetrieben wird. Der Elektromotor verfügt über einen Stator mit einer Spule und über einen Rotor, der mit Permanentmagneten bestückt ist. Abhängig von der Schwingungsfrequenz des mechanischen Oszillators, die mittels eines Sensors erfaßt wird, wird der Elektromotor so angesteuert, daß der mechanische Oszillator auch bei variierender Last in Resonanz verbleibt. Der mechanische Oszillator wird durch ein Feder-Masse-System ausgebildet, das eine Schraubenfeder oder einen Torsionsstab aufweisen kann.

Die EP 1 329 203 A1 offenbart eine elektrische Zahnbürste mit einer linear oszillierenden Antriebswelle für eine Aufsteckzahnbürste und mit einem Schwingungsdämpfer, der über eine Feder mit der Antriebswelle verbunden ist. Auf der Antriebswelle ist ein Anker aus einem magnetisierbaren Material angeordnet, der im wesentlichen eine zylindrische Form aufweist. Weiterhin weist die elektrische Zahnbürste eine feststehende Spule und feststehende Permanentmagnete auf, um die Welle in eine oszillierende Bewegung in Axialrichtung zu versetzen.

Aus der DE 30 25 708 A1 ist ein Wechselstrom-Kleinmotor mit pendelndem Läufer, insbesondere zum oszillierenden Antrieb einer an der Läuferwelle befestigten Zahnbürste, bekannt. Der Kleinmotor weist einen Ständer und einen pendelnden Läufer auf. Der Ständer besteht aus einem Gehäuse aus einem magnetisierbaren Material, einer Spule und einem Paar von Dauermagneten. Der Läufer weist ein an der Läuferwelle befestigtes Ankerteil und zwei daran diametral gegenüberliegend angeordnete Polstücke auf. Die Spule ist mit ihrer Achse senkrecht zur Läuferwelle und im wesentlichen senkrecht zum magnetischen Ständerfeld zwischen den Dauermagneten orientiert. Die Spule liegt innerhalb des Ständergehäuses im wesentlichen zwischen den Dauermagneten und umgibt das Ankerteil.

Die bekannten Motoren weisen teils einen offenen Aufbau des Magnetkreises auf, und sind relativ komplex und großvolumig aufgebaut. Ein weiterer Nachteil besteht darin, daß der Läufer jeweils eine hohe Masse bzw. ein hohes Trägheitsmoment aufweist und es dadurch zu starken Vibrationen des Motorgehäuses und der ganzen Zahnbürste kommt.

Der Erfindung liegt die Aufgabe zugrunde, eine Antriebseinheit zur Erzeugung einer oszillierenden Bewegung für elektrische Kleingeräte möglichst kompakt und vibrationsarm auszubilden.

Diese Aufgabe wird durch die Merkmalskombination des Anspruchs 1 gelöst.

Die erfindungsgemäße Antriebseinheit zur Erzeugung einer oszillierenden Bewegung für ein elektrisches Kleingerät weist einen Stator auf, der wenigstens eine Spule und eine erste und eine zweite Magnetanordnung mit wenigstens je einem Permanentmagneten enthält. Weiterhin weist die erfindungsgemäße Antriebseinheit einen nicht rotationssymmetrisch ausgebildeten Läufer mit einem ersten und einem zweiten radialen Fortsatz auf, die sich jeweils lediglich über einen Teilbereich des Umfangs des Läufers erstrecken und aus einem magnetisierbaren Material bestehen. Die Besonderheit der erfindungsgemäßen Antriebseinheit besteht darin, daß durch die Positionierung der Magnetanordnungen relativ zu den radialen Fortsätzen des Läufers paarweise Zuordnungen zwischen den Magnetanordnungen und den radialen Fortsätzen derart ausgebildet sind, daß jeweils die magnetische Wechselwirkung zwischen der Magnetanordnung und dem radialen Fortsatz eines Paares dauerhaft größer ist als die magnetische Wechselwirkung zwischen der Magnetanordnung und dem radialen Fortsatz zweier verschiedener Paare.

Die Erfindung hat den Vorteil, daß der Läufer eine niedrige Masse und ein niedriges Trägheitsmoment aufweist und dadurch unerwünschte Vibrationen lediglich in einem sehr geringen Ausmaß entstehen. Ein weiterer Vorteil besteht darin, daß ein hohes Drehmoment bei einem kleinen Durchmesser der Antriebseinheit erzielbar ist. Ebenso ist es vorteilhaft, daß die erfindungsgemäße Antriebseinheit über einen hohen Wirkungsgrad verfügt. Zudem treten bei der erfindungsgemäßen Antriebseinheit infolge des geschlossenen Magnetkreises lediglich geringe magnetische Streufelder auf.

Ein bevorzugtes Ausführungsbeispiel der erfindungsgemäßen Antriebseinheit ist so ausgebildet, daß jeder radiale Fortsatz je eine radiale Endfläche aufweist und jede Magnetanordnung der radialen Endfläche lediglich eines der radialen Fortsätze benachbart angeordnet ist. Dabei weisen die radialen Fortsätze jeweils wenigstens in einem an die radialen Endflächen angrenzenden Bereich vorzugsweise eine gleichbleibende Erstreckung in Umfangsrichtung auf. Um eine optimale Magnetisierung der radialen Fortsätze mit Hilfe der Spule zu ermöglichen, können die radialen Fortsätze einander diametral gegenüberliegend am Läufer angeordnet sein. In Ruhestellung sind die radialen Fortsätze vorzugsweise parallel zur Achse der wenigstens einen Spule orientiert.

Die Magnetanordnungen können jeweils wenigstens zwei in Umfangsrichtung voneinander beabstandete Permanentmagnete aufweisen. Insbesondere sind die beiden Permanentmagnete mit antiparalleler Orientierung nebeneinander angeordnet. Ebenso ist es auch möglich, daß die Magnetanordnungen jeweils einen Permanentmagneten mit wenigstens zwei antiparallel zueinander magnetisierten Bereichen und einer Magnetisierungslücke zwischen den beiden magnetisierten Bereichen aufweisen. Um einen optimalen Eisenrückschluß zu ermöglichen, können die Permanentmagnete der Magnetanordnungen auf Trägerplatten aus einem magnetisierbaren Material angeordnet sein, wobei pro Magnetanordnung jeweils eine Trägerplatte vorgesehen sein kann.

Der Läufer kann mit dem Stator über eine rückstellende Wechselwirkung gekoppelt sein und dadurch ein schwingungsfähiges System ausgebildet sein. Dadurch läßt sich mit einer vergleichsweise geringen Antriebsenergie eine große Amplitude der oszillierenden Bewegung erzeugen. Besonders vorteilhaft ist es, wenn die rückstellende Wechselwirkung so ausgebildet ist, daß sich die Resonanzfrequenz des schwingungsfähigen Systems bei Belastung zu einer Anregungsfrequenz hin verschiebt, mit der das schwingungsfähige System angeregt wird. Dadurch kann einem Einbruch der Amplitude der oszillierenden Bewegung ohne Änderung der Anregungsfrequenz entgegengewirkt werden. Die Anregungsfrequenz wird vorzugsweise größer als die Resonanzfrequenz gewählt. Die rückstellende Wechselwirkung kann eine Kennlinie aufweisen, die über die Ausbildung der radialen Fortsätze und/oder über die Magnetanordnungen beeinflußbar ist, so daß zur Erzielung der gewünschten Eigenschaften lediglich diese Komponenten angepaßt bzw. justiert werden müssen. Insbesondere können auf diese Weise auch Toleranzen kompensiert werden, die sich auf die magnetische Wechselwirkung zwischen den Magnetanordnungen und den radialen Fortsätzen auswirken. Die rückstellende Wechselwirkung weist vorzugsweise eine nichtlineare Kennlinie auf. Dadurch läßt sich ein für den jeweiligen Anwendungsfall optimiertes Schwingungsverhalten der erfindungsgemäßen Antriebseinheit realisieren.

Bei einem Ausführungsbeispiel der erfindungsgemäßen Antriebseinheit ist der Läufer über einen Torsionsstab mit dem Stator gekoppelt, wobei der Torsionsstab wenigstens bereichsweise innerhalb einer hohl ausgebildeten Welle des Läufers angeordnet ist. Dieses Ausführungsbeispiel hat den Vorteil, daß der Torsionsstab im Hinblick auf seine elastischen Eigenschaften sehr präzise gefertigt werden kann und somit die Resonanzfrequenz der erfindungsgemäßen Antriebseinheit bei einer Serienfertigung nicht stark streut. Außerdem wird bei einer Unterbringung des Torsionsstabs in der hohl ausgebildeten Welle kaum zusätzlicher Bauraum benötigt. Alternativ dazu kann der Läufer über eine Schraubenfeder oder eine Spiralfeder mit dem Stator gekoppelt sein.

In einer vorteilhaften Ausgestaltung der erfindungsgemäßen Antriebseinheit ist ein Gehäuse vorgesehen, das zwei Gehäuseteile aufweist, die sich im Bereich der Magnetanordnungen in Umfangsrichtung überlappen. Dadurch wird der Zusammenbau der erfindungsgemäßen Antriebseinheit erleichtert und es sind nahezu beliebige Gehäuseformen möglich. Außerdem wird der Eisenrückschluß über das Gehäuse verbessert, so daß in der Regel auf die Trägerplatten für die Permanentmagnete verzichtet werden kann.

Die Erfindung bezieht sich weiterhin auf ein elektrisches Kleingerät mit der erfindungsgemäßen Antriebseinheit. Das erfindungsgemäße Kleingerät ist vorzugsweise als eine elektrische Zahnbürste oder als ein elektrischer Rasierapparat ausgebildet.

Die Erfindung wird nachstehend an Hand der in der Zeichnung dargestellten Ausführungsbeispiele näher erläutert, bei denen die erfindungsgemäße Antriebseinheit jeweils für den Einsatz bei einer elektrischen Zahnbürste vorgesehen ist.

Es zeigen:
- Fig. 1: ein Ausführungsbeispiel für eine erfindungsgemäß ausgebildete Antriebseinheit in einer stark schematisierten Schnittdarstellung,
- Fig. 2: ein Diagramm mit unterschiedlichen Verläufen des auf den Läufer wirkenden Rückstellmoments in Abhängigkeit von der Auslenkung des Läufers aus der Ruhelage,
- Fig. 3: ein Diagramm für das Schwingungsverhalten der erfindungsgemäßen Antriebseinheit in der Umgebung der Resonanzfrequenz bei unterschiedlicher Belastung und unterschiedlicher Ausbildung der erfindungsgemäßen Antriebseinheit,
- Fig. 4: ein weiteres Ausführungsbeispiel der erfindungsgemäßen Antriebseinheit in einer Fig. 1 entsprechenden Darstellung,
- Fig. 5: ein weiteres Ausführungsbeispiel der erfindungsgemäßen Antriebseinheit in einer Fig. 1 entsprechenden Darstellung,
- Fig. 6: ein nochmals abgewandeltes Ausführungsbeispiel der erfindungsgemäßen Antriebseinheit in einer Fig. 1 entsprechenden Darstellung und
- Fig. 7: eine konkrete Ausgestaltung eines Ausführungsbeispiels der erfindungsgemäßen Antriebseinheit in perspektivischer Darstellung.

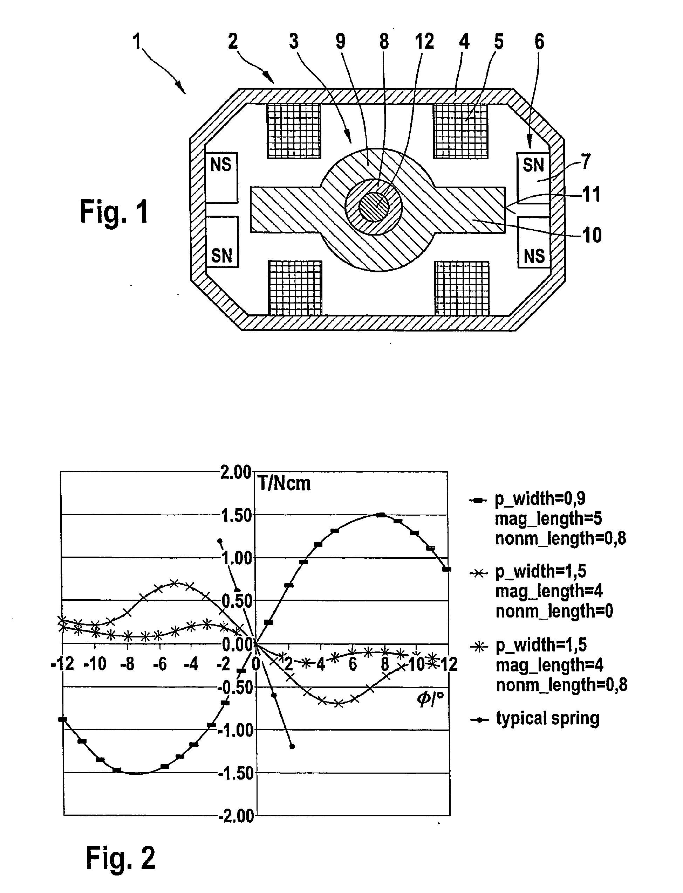

Fig. 1 zeigt ein Ausführungsbeispiel für eine erfindungsgemäß ausgebildete Antriebseinheit 1 in einer stark schematisierten Schnittdarstellung. Als wesentliche Funktionskomponenten weist die Antriebseinheit 1 einen ortsfesten Stator 2 und einen relativ zum Stator 2 um die Längsachse der Antriebseinheit 1 drehbar angeordneten Läufer 3 auf. Der Stator 2 verfügt über ein Gehäuse 4 aus einem magnetisierbaren Material, zwei beispielsweise in Reihe geschaltete Spulen 5 und zwei Magnetanordnungen 6, die jeweils zwei Permanentmagnete 7 aufweisen. Die beiden Spulen 5 sind parallel zueinander angeordnet, wobei die Achsen der Spulen 5 miteinander zusammenfallen und in der Darstellung der Fig. 1 horizontal verlaufen. Die Magnetanordnungen 6 sind einander gegenüberliegend an entgegengesetzten Seiten des Gehäuses 4 angeordnet, wobei die einzelnen Permanentmagnete 7 der Magnetanordnungen 6 jeweils symmetrisch zur Achse der Spulen 5 mit antiparalleler Polung nebeneinander positioniert sind. Dabei ist zwischen den beiden Permanentmagneten 7 jeder Magnetanordnung 6 jeweils ein geringer Abstand eingehalten, der beispielsweise zu Einstell- oder Kalibrierzwecken variiert werden kann. Der Läufer 3 ist koaxial innerhalb des Stators 2 angeordnet und weist eine Welle 8 auf, auf der ein Anker 9 aus einem magnetisierbaren Material angeordnet ist. Beispielsweise ist der Anker 9 aus axial nebeneinander angeordneten Weicheisen-Blechen zusammengesetzt. In zwei Umfangsbereichen des Ankers 9 ist je ein radialer Fortsatz 10 ausgebildet, so daß sich der Anker 9 dort weiter radial nach außen erstreck als in den dazwischen liegenden Umfangsbereichen und somit nicht rotationssymmetrisch ausgebildet ist. Die radialen Fortsätze 10 erstrecken sich in der in Fig. 1 dargestellten Ruhestellung der Antriebseinheit 1 in entgegengesetzten Richtungen parallel zur Achse der Spulen 5 und reichen mit ihren radialen Endflächen 11 bis nahe an die Permanentmagnete 7 heran. Dabei verlaufen die Achsen der Spulen 5 mittig durch die radialen Fortsätze 10. Im dargestellten Ausführungsbeispiel ist die Welle 8 hohl ausgebildet und weist in ihrem Inneren einen konzentrisch angeordneten Torsionsstab 12 auf, der an seinem einen Ende drehfest mit dem Stator 2 und an seinem anderen Ende drehfest mit dem Läufer 3 verbunden ist und dadurch auf den Läufer 3 ein rückstellendes Drehmoment in die Ruhestellung der Antriebseinheit 1 ausübt.

Bei einem Stromfluß durch die Spulen 5 entsteht im Anker 9 ein Magnetfeld, das parallel zu den radialen Fortsätzen 10 des Ankers 9 orientiert ist, so daß im Bereich der radialen Endflächen 11 der radialen Fortsätze 10 entgegengesetzte magnetische Pole ausgebildet werden und es zu einer magnetischen Wechselwirkung mit den Permanentmagneten 7 der Magnetanordnungen 6 kommt. Durch die magnetische Wechselwirkung wird ein Drehmoment auf den Anker 9 ausgeübt, durch das der Anker 9 aus seiner Ruhelage ausgelenkt und dabei die Welle 8 geringfügig gedreht wird. Da bei den beiden radialen Fortsätzen 10 des Ankers 9 entgegengesetzte Magnetpole ausgebildet werden, hat die magnetische Wechselwirkung der beiden Magnetanordnungen 6 mit den jeweils benachbarten radialen Fortsätzen 10 des Ankers 9 richtungsgleiche Drehmomente zur Folge, die sich demnach addieren. Angesichts der großen Entfernung kommt es zwischen den Magnetanordnungen 6 und den jeweils diametral gegenüberliegenden radialen Fortsätzen 10 des Ankers 9 lediglich zu einer magnetischen Wechselwirkung, die erheblich geringer ist als die vorstehend beschriebene magnetische Wechselwirkung zwischen benachbarten Magnetanordnungen 6 und radialen Fortsätzen 10 des Ankers 9.

Die durch die magnetische Wechselwirkung hervorgerufene Drehbewegung des Läufers 3 hängt bei fest vorgegebener Orientierung der Magnetanordnungen 6 von der Richtung des im Anker 9 erzeugten Magnetfelds und damit von der Stromrichtung in den Spulen 5 ab. Dadurch ist es möglich, die Drehrichtung des Läufers 3 durch eine Umkehrung des Stromflusses in den Spulen 5 umzukehren und dadurch den Läufer 3 wieder in die Ruheposition zurückzudrehen. Die Drehbewegung in Richtung der Ruheposition wird zudem durch das vom Torsionsstab 12 erzeugte rückstellende Moment unterstützt. Durch eine periodische Umpolung des Stromflusses in den Spulen 5 kann eine oszillierende Drehbewegung des Läufers 3 erzeugt werden. Da von dem Torsionsstab 12 und dem Läufer 3 ein schwingungsfähiges Feder-Masse-System ausgebildet wird, wird die Amplitude der oszillierenden Drehbewegung für eine gegebene Bestromung der Spulen 5 dann besonders groß, wenn die Frequenz des Stromsignals mit der Resonanzfrequenz des Feder-Masse-Systems übereinstimmt. Die Resonanzfrequenz hängt vom Trägheitsmoment des Läufers 3 und des Torsionsstabs 12 sowie von der Federkonstante des Torsionsstabs 12 ab. Darüber hinaus läßt sich die Resonanzfrequenz auch durch die Magnetanordnungen 6 und die radialen Fortsätze 10 des Ankers 9 beeinflussen, da durch die Permanentmagnete 7 ein magnetisches Rückstellmoment auf den Läufer 3 ausgeübt wird, dessen Charakteristik von der Geometrie der Magnetanordnungen 6 und von der Formgebung der radialen Fortsätze 10 des Ankers 9 in der Nähe ihrer radialen Endflächen 11 abhängt. Besonders geeignet für eine individuelle Variation des magnetischen Rückstellelements ist der Abstand zwischen benachbarten Permanentmagneten 7 einer Magnetanordnung 6. Das magnetische Rückstellmoment wirkt sich wie eine zusätzliche Feder zwischen dem Stator 2 und dem Läufer 3 aus, wobei der Einfluß des magnetischen Rückstellmoments auf die Federkennlinie relativ komplex ist. Um dies zu veranschaulichen, sind in Fig. 2 einige typische Verläufe des magnetischen Rückstellmoments beispielhaft dargestellt.

Fig. 2 zeigt ein Diagramm mit unterschiedlichen Verläufen des auf den Läufer 3 wirkenden Rückstellmoments in Abhängigkeit von der Auslenkung des Läufers 3 aus der Ruhelage. Auf der Abszisse ist der Drehwinkel *φ* aufgetragen, um den der Läufer 3 aus der Ruhelage herausgedreht wird. Auf der Ordinate ist das Rückstellmoment T aufgetragen. Die eingezeichneten Kurvenverläufe repräsentieren unterschiedliche Parametersätze für die Breite p_width der radialen Fortsätze 10 des Ankers 9 im Bereich der radialen Endflächen 11, für die Längserstreckung mag_lenth der Permanentmagnete 7 der Magnetanordnungen 6 und für den Abstand nonm_length zwischen benachbarten Permanentmagneten 7 einer Magnetanordnung 6. Sämtliche Kurvenverläufe repräsentieren jeweils die Verhältnisse, wie sie ohne einen Stromfluß durch die Spulen 5 vorliegen. Zum Vergleich ist in das Diagramm auch der Kurvenverlauf für eine konventionelle Feder eingezeichnet, bei der das Rückstellmoment T proportional zum Drehwinkel *φ* betragsmäßig zunimmt, so daß bei jeder Auslenkung ein Rückstellmoment T in Richtung der Ruhelage vorhanden ist, in der die Auslenkung gleich Null ist. Der Kurvenverlauf für die konventionelle Feder wird folglich durch eine Gerade repräsentiert.

Für das durch die magnetische Wechselwirkung hervorgerufene Rückstellmoment T ergeben sich gänzlich andere Kurvenverläufe als für eine konventionelle Feder. Die größte Übereinstimmung mit dem Verhalten einer konventionellen Feder lieg dann vor, wenn die radialen Fortsätze 10 des Ankers 9 relativ breit sind (p_width=1,5) und die Magnetanordnungen 6 so ausgebildet werden, daß relativ kurze Permanentmagnete 7 (mag_length=4) unmittelbar nebeneinander angeordnet sind (nonm_length=0). Bei diesen Parametern weist der Kurvenverlauf durchgängig das gleiche Vorzeichen auf wie die Kurve für die konventionelle Feder, d. h. über den gesamten dargestellten Bereich liegt ein Rückstellmoment T in Richtung Ruhelage vor. Für die Realisierung der Antriebseinheit 1 wird ein etwas abgewandelter Kurvenverlauf bevorzugt, der bei gleicher Breite der radialen Fortsätze 10 des Ankers 9 (p_width=1,5) und bei gleicher Länge der Permanentmagnete 7 (mag_length=4) dadurch entsteht, daß die Permanentmagnete 7 in einem Abstand (nonm_length=0.8) zueinander angeordnet werden. Dies führt zu einer Abflachung des Kurvenverlaufs, wobei das Vorzeichen jeweils beibehalten wird. Ein nochmals anderer Kurvenverlauf ergibt sich, wenn man die radialen Fortsätze 10 des Ankers 9 relativ schmal gestaltet (p_width=0,9) und relativ lange Permanentmagnete 7 (mag_length=5) in einem Abstand (nonm_length=0,8) zueinander anordnet. In diesem Fall kehrt sich das Vorzeichen des Kurvenverlaufs verglichen mit der konventionellen Feder im gesamten dargestellten Bereich um. Dies bedeutet, daß es für einen derartigen Parametersatz nicht zu einem Rückstellmoment T zur Ruhelage hin kommt. Statt dessen bewirkt das durch die magnetische Wechselwirkung verursachte Drehmoment eine Auslenkung aus der Ruhelage.

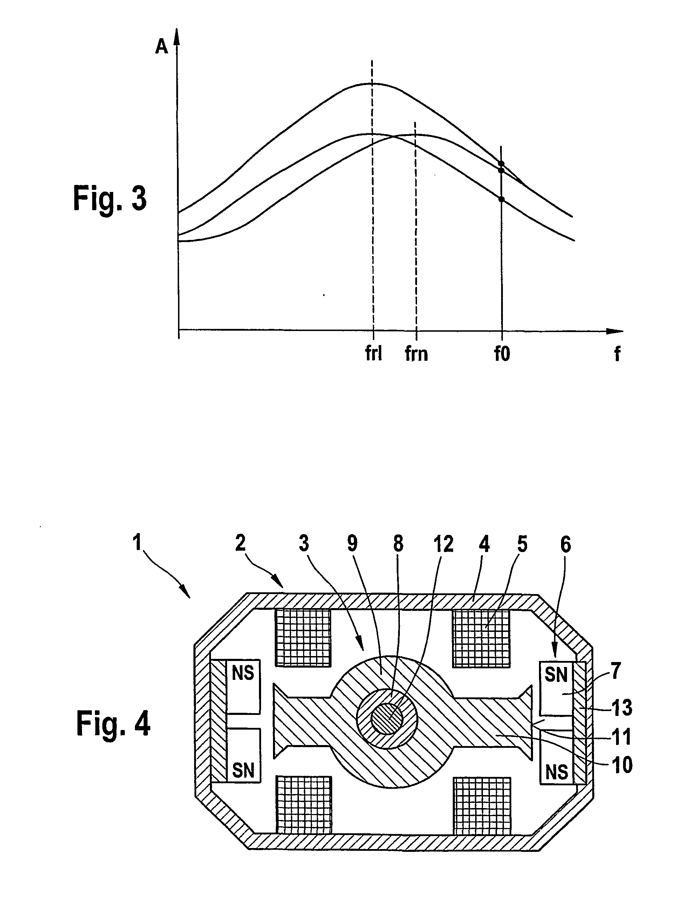

Sämtliche in Fig. 2 dargestellten Kurven für das auf der magnetischen Wechselwirkung basierende Rückstellmoment T zeigen im Gegensatz zur konventionellen Feder einen stark nichtlinearen Verlauf. Dadurch kommt es zu einer Verschiebung der Resonanzfrequenz des schwingungsfähigen Systems bei einer Änderung der Amplitude der oszillierenden Bewegung. Dieser Effekt wird erfindungsgemäß dazu genutzt, den belastungsbedingten Rückgang der Amplitude der mit der Antriebseinheit 1 erzeugten oszillierenden Bewegung möglichst gering zu halten. Dies wird im einzelnen anhand Fig. 3 erläutert.

Fig. 3 zeigt ein Diagramm für das Schwingungsverhalten der Antriebseinheit 1 in der Umgebung der Resonanzfrequenz bei unterschiedlicher Belastung und unterschiedlicher Ausbildung der Antriebseinheit 1. Auf der Abszisse ist die Schwingungsfrequenz f der oszillatorischen Bewegung aufgetragen und auf der Ordinate die Amplitude A. Sämtlichen dargestellten Kurven ist gemeinsam, daß die Amplitude A mit einer Annäherung der Schwingungsfrequenz f an die Resonanzfrequenz frl bzw. frn der Antriebseinheit 1 zunimmt und nach einer Überschreitung der Resonanzfrequenz frl bzw. fm wieder abnimmt, so daß die Kurven jeweils bei der zugehörigen Resonanzfrequenz frl bzw. frn ein Maximum aufweisen. Dabei bezeichnet frl die Resonanzfrequenz einer Antriebseinheit 1 mit einer linearen Federkennlinie und frn die Resonanzfrequenz einer Antriebseinheit 1 mit einer nichtlinearen Federkennlinie. Die Größe der Amplitude A im Bereich des Maximums hängt von der Belastung der Antriebseinheit 1 ab. So repräsentiert die oberste Kurve den Amplitudenverlauf für die Antriebseinheit 1 im unbelasteten Zustand. Die beiden unteren Kurven zeigen jeweils einen Amplitudenverlauf im belasteten Zustand der Antriebseinheit 1, so daß die belastungsbedingte Verringerung der Amplitude A unmittelbar aus Fig. 3 hervorgeht. Die linke der beiden unteren Kurven bezieht sich auf eine Antriebseinheit 1 mit einer linearen Federkennlinie. Bei einer derart ausgebildeten Antriebseinheit 1 bleibt die Resonanzfrequenz frl auch bei Belastung gleich und es ändert sich lediglich die Amplitude A. Im Falle einer nichtlinearen Federkennlinie verschiebt sich allerdings die Resonanzfrequenz frn mit zunehmender Belastung der Antriebseinheit 1. Dies trifft für die untere rechte Kurve zu, bei der sich die Resonanzfrequenz frn mit zunehmender Belastung zu höheren Schwingungsfrequenzen f verschiebt. Im Rahmen der Erfindung wird vorzugsweise von einer nichtlinearen Federkennlinie mit einem derartigen Verhalten Gebrauch gemacht. Die Reduzierung der Amplitude A unter Belastung im Bereich der Resonanzfrequenz frn kann zwar auch in diesem Fall nicht verhindert werden. Allerdings kann die Verringerung der Amplitude A zum Teil kompensiert werden. Hierzu wird die Antriebseinheit 1 mit einer festen Frequenz f0 oberhalb der Resonanzfrequenz frn angeregt. Die Verschiebung der Resonanzfrequenz frn unter Belastung hat dann zur Folge, daß die Anregung im belasteten Zustand der Antriebseinheit 1 näher an der Resonanzfrequenz frn stattfindet als im unbelasteten Zustand. Eine Anregung näher an der Resonanzfrequenz frn führt wiederum zu einer höheren Amplitude A am Ort der Anregungsfrequenz f0, so daß die belastungsbedingte Verringerung der Amplitude A ganz oder teilweise kompensiert wird. Insgesamt kommt es somit für die nichtlineare Federkennlinie bei der Anregungsfrequenz f0 zu einer weniger stark ausgeprägten Reduzierung der Amplitude A bei Belastung als dies für die lineare Federkennlinie der Fall ist.

Fig. 4 zeigt ein weiteres Ausführungsbeispiel der Antriebseinheit 1 in einer Fig. 1 entsprechenden Darstellung. Dieses Ausführungsbeispiel zeichnet sich dadurch aus, daß die radialen Fortsätze 10 des Ankers 9 in der Nähe der radialen Endflächen 11 in Umfangsrichtung verbreitert sind. Außerdem sind bei diesem Ausführungsbeispiel Trägerplatten 13 aus einem magnetisierbaren Material vorgesehen, auf denen jeweils die Permanentmagnete 7 einer Magnetanordnung 6 gemeinsam angeordnet sind. Die Trägerplatten 13 dienen jeweils als Eisenrückschluß für die Permanentmagnete 7 und sind insbesondere bei starken Permanentmagneten 7, beispielsweise bei Permanentmagneten 7 aus NdFeB, sinnvoll. Ansonsten entspricht das in Fig. 4 dargestellte Ausführungsbeispiel der Antriebseinheit 1 in Aufbau und Funktionsweise dem Ausführungsbeispiel aus Fig. 1.

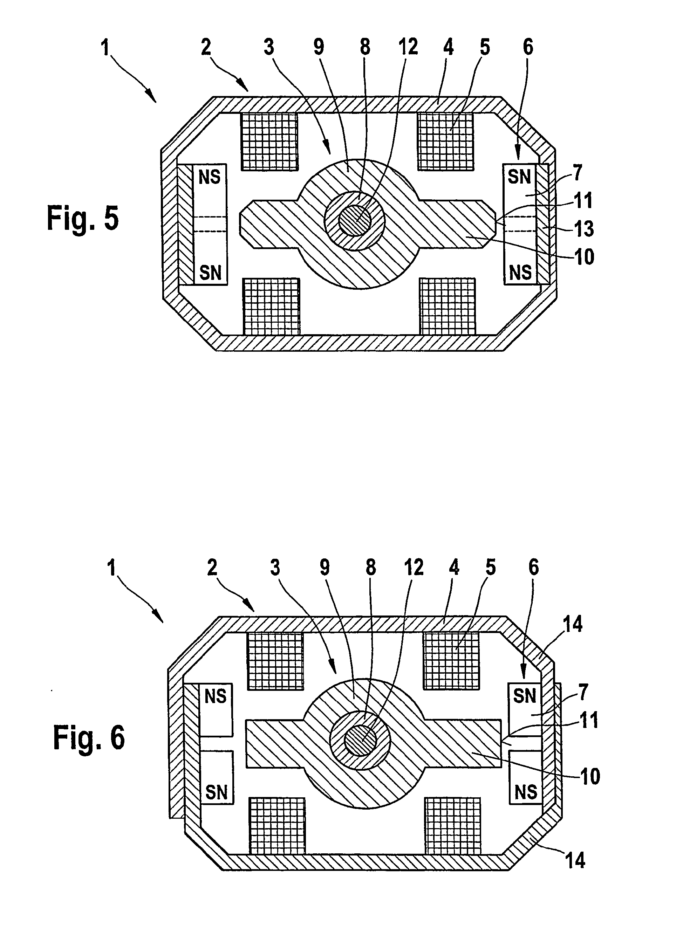

Fig. 5 zeigt wiederum ein Ausführungsbeispiel der Antriebseinheit 1 in einer Fig. 1 entsprechenden Darstellung. Die Besonderheit dieses Ausführungsbeispiels besteht darin, daß sich die radialen Fortsätze 10 des Ankers 9 in der Nähe der radialen Endflächen 11 verjüngen und daß jede Magnetanordnung 6 nur jeweils einen Permanentmagneten 7 aufweist. Die Permanentmagnete 7 sind jeweils so magnetisiert, daß zwei antiparallel magnetisierte Bereiche durch eine Magnetisierungslücke getrennt nebeneinander angeordnet sind. Dies bedeutet, daß die Permanentmagnete 7 der in den Fig. 1 und 4 dargestellten Magnetanordnungen 6 jeweils unter Beibehaltung der magnetischen Orientierung zu einem einzigen Permanentmagneten 7 pro Magnetanordnung 6 zusammengefaßt sind. Analog zum Ausführungsbeispiel gemäß Fig. 4 sind auch beim Ausführungsbeispiel der Fig. 5 die Trägerplatten 13 für die Permanentmagnete 7 vorgesehen.

Fig. 6 zeigt ein nochmals abgewandeltes Ausführungsbeispiel der Antriebseinheit 1 in einer Fig. 1 entsprechenden Darstellung. Dieses Ausführungsbeispiel zeichnet sich dadurch aus, daß das Gehäuse 4 aus zwei Halbschalen 14 aus einem magnetisierbaren Material zusammengesetzt ist. Die Halbschalen 14 überlappen einander im Bereich der Magnetanordnungen 6, so daß durch die im Überlappungsbereich verdoppelte Materialstärke des Gehäuses 4 ein verstärkter Eisenrückschluß für die Permanentmagnete 7 ausgebildet ist. Die Trägerplatten 13 können bei diesem Ausführungsbeispiel somit in der Regel entfallen. Zudem wird der Zusammenbau der Antriebseinheit 1 durch die Halbschalen 14 erleichtert und es lassen sich nahezu beliebige Gehäuseformen ausbilden.

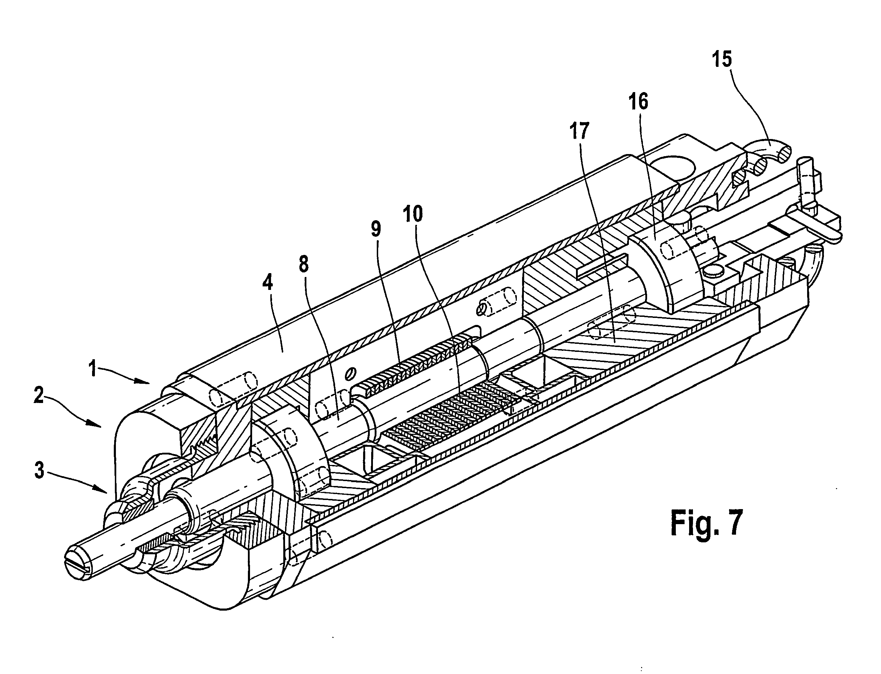

Fig. 7 zeigt eine konkrete Ausgestaltung eines Ausführungsbeispiels der Antriebseinheit 1 in perspektivischer Darstellung. Bei diesem Ausführungsbeispiel ist als drehelastisches Element zwischen dem Stator 2 und dem Läufer 3 kein Torsionsstab 12, sondern eine Schraubenfeder 15 vorgesehen. Statt der Schraubenfeder 15 könnte beispielsweise auch eine Spiralfeder zum Einsatz kommen. Da kein Torsionsstab 12 vorhanden ist, ist die Welle 8 nicht hohl, sondern als Massivteil ausgebildet. Um eine figürlich nicht dargestellte Aufsteckzahnbürste anbringen zu können, ragt ein axiales Ende der Welle 8 aus dem Gehäuse 4 heraus. Die drehbare Lagerung der Welle 8 erfolgt mittels zweier Lager 16, die in einer inneren Auskleidung 17 eingebettet sind. Die innere Auskleidung 17 dient zudem auch als Wickelkörper für die Spulen 5, die in Fig. 7 nicht eingezeichnet sind.

Die Antriebseinheit 1 kann jeweils so abgewandelt werden, daß statt der blockförmig ausgebildeten Permanentmagnete 7 schalenförmige Magnetsegmente verwendet werden. Außerdem können die bei den vorstehend beschriebenen Ausführungsbeispielen der Antriebseinheit 1 vorhandenen Merkmale zur Ausbildung weiterer Ausführungsbeispiele miteinander kombiniert werden.

## Patentansprüche

1. Antriebseinheit zur Erzeugung einer oszillierenden Bewegung für ein elektrisches Kleingerät, mit
- einem Stator (2), der wenigstens eine Spule (5) und eine erste und eine zweite Magnetanordnung (6) mit wenigstens je einem Permanentmagneten (7) aufweist, und
- einem nicht rotationssymmetrisch ausgebildeten Läufer (3), der einen ersten und einen zweiten radialen Fortsatz (10) aufweist, die sich jeweils lediglich über einen Teilbereich des Umfangs des Läufers (3) erstrecken und aus einem magnetisierbaren Material bestehen,
wobei durch die Positionierung der Magnetanordnungen (6) relativ zu den radialen Fortsätzen (10) des Läufers (3) paarweise Zuordnungen zwischen den Magnetanordnungen (6) und den radialen Fortsätzen (10) gebildet sind, und zwar derart, dass jedem Paar je eine Magnetanirdung (6) und je ein radialer Fortsatz (10) zugeordnet sind und derart, dass jeweils die magnetische Wechselwirkung zwischen der Magnetanordnung (6) und dem radialen Fortsatz (10) des gleichen Paares dauerhaft größer ist, als die jeweilige magnetische Wechselwirkung zwischen den Magnetanordnungen (6) und den radialen Fortsätzen (10) zweier verschiedener Paare,
und wobei weiterhin der Läufer (3) mit dem Stator (2) über eine rück-stellende Wechselwirkung mit einer nichtlinearen Kennlinie gekoppelt ist und dadurch ein schwingungsfähiges System ausgebildet ist.
**dadurch gekennzeichnet,**
**dass** die Magnetanordnungen (6) entweder jeweils wenigstens zwei in Umfangsrichtung voneinander beabstandete Permanentmagnete (7) aufweisen, die mit antiparalleler Orientierung nebeneinander angeordnet sind, oder dass die Magnetanordnungen (6) jeweils einen Permanentmagneten (7) mit wenigstens zwei antiparallel zueinander magnetisierten Bereichen und einer Magnetisierungslücke zwischen den beiden magnetisierten Bereichen aufweisen

2. Antriebseinheit nach Anspruch 1, **dadurch gekennzeichnet, dass** die Antriebseinheit dazu ausgestattet ist, dass das schwingungsfähige System mit einer Anregungsfrequenz angeregt wird, die nicht mit der Resonanzfrequenz des schwingungsfähigen Systems übereinstimmt.

3. Antriebseinheit nach Anspruch 2, **dadurch gekennzeichnet, dass** die Anregungsfrequenz größer ist als die Resonanzfrequenz.

4. Antriebseinheit nach einem der Ansprüche 1 bis 3, **dadurch gekennzeichnet, dass** die nichtlineare Kennlinie über die Ausbildung der radialen Fortsätze (10) und/oder über die Magnetanordnungen (6) beeinflußbar ist.

5. Antriebseinheit nach Anspruch 1, **dadurch gekennzeichnet, dass** jeder radiale Fortsatz (10) je eine radiale Endfläche (11) aufweist und jede Magnetanordnung (6) der radialen Endfläche (11) lediglich eines der radialen Fortsätze (10) benachbart angeordnet ist.

6. Antriebseinheit nach Anspruch 1, **dadurch gekennzeichnet, dass** die radialen Fortsätze (10) einander diametral gegenüberliegend am Läufer (3) angeordnet sind.

7. Antriebseinheit nach Anspruch 1, **dadurch gekennzeichnet, dass** die radialen Fortsätze (10) in Ruhestellung parallel zur Achse der wenigstens einen Spule (5) orientiert sind.

8. Antriebseinheit nach einem Anspruch 1, **dadurch gekennzeichnet, dass** die Permanentmagnete (7) der Magnetanordnungen (6) auf Trägerplatten (13) aus einem magnetisierbaren Material angeordnet sind, wobei pro Magnetanordnung (6) jeweils eine Trägerplatte (13) vorgesehen ist.

9. Antriebseinheit nach Anspruch 1, **dadurch gekennzeichnet, dass** der Läufer (3) über einen Torsionsstab (12) mit dem Stator (2) gekoppelt ist, wobei der Torsionsstab (12) wenigstens bereichsweise innerhalb einer hohl ausgebildeten Welle (8) des Läufers (3) angeordnet ist.

10. Antriebseinheit nach Anspruch 1, **dadurch gekennzeichnet, dass** der Läufer (3) über eine Schraubenfeder (15) oder eine Spiralfeder mit dem Stator (2) gekoppelt ist.

11. Antriebseinheit nach Anspruch 1, **dadurch gekennzeichnet, dass** ein Gehäuse (4) vorgesehen ist, das zwei Gehäuseteile (14) aufweist, die sich im Bereich der Magnetanordnungen (6) in Umfangsrichtung überlappen.

12. Elektrisches Kleingerät, **dadurch gekennzeichnet, dass** es eine Antriebseinheit (1) nach einem der vorhergehenden Ansprüche aufweist.

13. Kleingerät nach Anspruch 12, **dadurch gekennzeichnet, dass** es als eine elektrische Zahnbürste oder als ein elektrischer Rasierapparat ausgebildet ist.

## Claims

1. A drive unit for producing an oscillating movement for a small electrical appliance, having
- a stator (2) which has at least one winding (5) and a first and second magnet assembly (6) with at least one permanent magnet (7) for each such magnet assembly; and
- a non rotationally symmetric rotor (3) which has a first and second radial extension (10), each of which extensions extends over only a portion of the periphery of the rotor (3) and is made of a magnetizable material;
wherein, by positioning of the magnet assemblies (6) relative to the radial extensions (10) of the rotor (3), pairwise associations between the magnet assemblies (6) and the radial extensions (10) are formed, such that each pair comprises a magnet assembly (6) and a radial extension (10) and such that the magnetic interaction between the magnet assembly (6) and the radial extension (10) in a given such pair endures greater than the respective magnetic interaction between the magnet assembly (6) and the radial extension (10) of two different pairs, and wherein the rotor (3) is furthermore coupled with a stator (2) via a restoring interaction with a nonlinear characteristic, whereby a system susceptible to oscillation is formed;
**characterized in that**
the magnet assemblies (6) comprise either at least two permanent magnets (7) separated in the circumferential direction which are disposed side by side with an antiparallel orientation, or the magnet assemblies (6) comprise a permanent magnet (7) with at least two magnetized regions which are antiparallel with respect to each other with a magnetization gap between the two magnetized regions.

2. The drive unit according to claim 1; **characterized in that** the drive unit is equipped such that the system susceptible to oscillation is excited with an excitation frequency that does not correspond to the resonance frequency of the system susceptible to oscillation.

3. The drive unit according to claim 2; **characterized in that** the excitation frequency is greater than the resonance frequency.

4. The drive unit according to any one of claims 1 to 3; **characterized in that** the nonlinear characteristic can be influenced by the configuration of the radial extensions (10) and/or by the magnet assemblies (6).

5. The drive unit according to claim 1; **characterized in that** each radial extension (10) has a radial end surface (11), and each magnet assembly (6) is disposed near to the radial end surface (11) of only one of the radial extensions (10).

6. The drive unit according to claim 1; **characterized in that** the radial extensions (10) are disposed radially diametrically oppositely on the rotor (3).

7. The drive unit according to claim 1; **characterized in that** in the rest position the radial extensions (10) are oriented parallelly to the axis of the at least one winding (5).

8. The drive unit according to claim 1; **characterized in that** the permanent magnets (7) of the magnet assemblies (6) are disposed on support plates (13) made of a magnetizable material, wherein one support plate (13) is provided for one magnet assembly (6).

9. The drive unit according to claim 1; **characterized in that** the rotor (3) is coupled to the stator (2) via a torsion rod (12), wherein the torsion rod (12) in at least a region is disposed in a hollow shaft (8) of the rotor (3).

10. The drive unit according to claim 1; **characterized in that** the rotor (3) is coupled to the stator (2) via a helical spring (15) or a spiral spring.

11. The drive unit according to claim 1; **characterized in that** a housing (4) is provided, having two housing parts (14) which overlap in the circumferential direction in the region of the magnet assemblies (6).

12. A small electric appliance; **characterized in that** it has a drive unit (1) according to any one of the preceding claims.

13. The small appliance according to claim 12; **characterized in that** it is configured as an electric toothbrush or an electric razor.

## Revendications

1. Unité d'entraînement pour la production d'un mouvement oscillant pour un petit appareil électrique, avec
- un stator (2), qui présente au moins une bobine (5) et un premier et un deuxième agencements formant aimant (6) avec au moins un aimant permanent chacun (7) et
- un rotor (3) construit de manière non symétrique en rotation, qui présente une première et une deuxième extensions radiales (10), qui s'étendent chacune uniquement sur une partie de la circonférence du rotor (3) et sont composées d'un matériau magnétisable,
dans laquelle grâce au positionnement des agencements formant aimant (6) par rapport aux extensions radiales (10) du rotor (3), des répartitions par paire entre les agencements formant aimant (6) et les extensions radiales (10) sont formées, de telle sorte que chaque paire est constituée par un agencement formant aimant (6) et une extension radiale (10) et de telle sorte que chaque interaction magnétique entre l'agencement formant aimant (6) et l'extension radiale (10) de la même paire est durablement plus importante que chaque interaction magnétique entre l'agencement formant aimant (6) et l'extension radiale (10) de deux paires différentes et dans laquelle en outre, le rotor (3) est couplé avec un stator (2) par le biais d'une interaction de rappel avec une caractéristique non linéaire et ainsi, un système pouvant osciller est formé.,
**caractérisé en ce que**
les agencements formant aimant (6) présentent chacun au moins deux aimants permanents (7) écartés l'un de l'autre dans la direction de la circonférence, qui sont agencés selon une orientation antiparallèle l'un à côté de l'autre, ou alors les agencements formant aimant (6) présentent chacun un aimant permanent (7) avec au moins deux zones magnétisées de manière antiparallèle l'une par rapport à l'autre et un espace de magnétisation entre les deux zones magnétisées.

2. Unité d'entraînement selon la revendication 1, **caractérisée en ce que** l'unité d'entraînement est conçue pour que le système pouvant osciller soit excité avec une fréquence d'excitation, qui ne correspond pas à la fréquence de résonance du système pouvant osciller.

3. Unité d'entraînement selon la revendication 2, **caractérisée en ce que** la fréquence d'excitation est supérieure à la fréquence de résonance.

4. Unité d'entraînement selon l'une des revendications 1 à 3, **caractérisée en ce que** la caractéristique non linéaire sur la formation des extensions radiales (10) et/ou sur les agencements formant aimant (6) peut être influencée.

5. Unité d'entraînement selon la revendication 1, **caractérisée en ce que** chaque extension radiale (10) présente une surface d'extrémité radiale (11) et chaque agencement formant aimant (6) de la surface d'extrémité radiale (11) est installé à côté d'une seule des extensions radiales (10).

6. Unité d'entraînement selon la revendication 1, **caractérisée en ce que** les extensions radiales (10) sont agencées de manière diamétralement opposée les unes par rapport aux autres sur le rotor (3).

7. Unité d'entraînement selon la revendication 1, **caractérisée en ce que** les extensions radiales (10) sont orientées en position de repos de manière parallèle à l'axe de la au moins une bobine (5).

8. Unité d'entraînement selon la revendication 1, **caractérisée en ce que** les aimants permanents (7) des agencements formant aimant (6) sont agencés sur des plaques de support (13) en un matériau magnétisable, dans laquelle une plaque de support (13) est prévue pour chaque agencement formant aimant (6).

9. Unité d'entraînement selon la revendication 1, **caractérisée en ce que** le rotor (3) est couplé par le biais d'une barre de torsion (12) avec le stator (2), dans laquelle la barre de torsion (12) est agencée au moins partiellement à l'intérieur d'un arbre creux (8) du rotor (3).

10. Unité d'entraînement selon la revendication 1, **caractérisée en ce que** le rotor (3) est couplé par l'intermédiaire d'un ressort hélicoïdal (15) ou d'un ressort à spirales avec le stator (2).

11. Unité d'entraînement selon la revendication 1, **caractérisée en ce qu'**un boîtier est (4) est prévu, présentant deux parties de boîtier (14), qui se chevauchent dans la zone des agencements formant aimant (6) dans la direction de la circonférence.

12. Petit appareil électrique, **caractérisé en ce qu'**il présente une unité d'entraînement (1) selon l'une quelconque des revendications précédentes.

13. Petit appareil électrique selon la revendication 12, **caractérisé en ce qu'**il est conçu comme une brosse à dents électriques ou comme un rasoir électrique.
